# EUROPEAN PATENT SPECIFICATION

(11) **EP 1 808 290 B1**
(45) Date of publication and mention of the grant of the patent: **17.03.2010**
(21) Application number: 06000510.5
(22) Date of filing: 11.01.2006
(51) Int. Cl.: B32B 21/10, B65D 8/00, B65D 8/04

(54) **BENDABLE BOARD MATERIAL**
BIEGBARES BRETTMATERIAL
MATÉRIAU POUR PLANCHES FLEXIBLE

(43) Date of publication of application: 18.07.2007
(73) Proprietor: Wang, Wen-Tsan, Taipei City (TW)
(72) Inventor: Wang, Wen-Tsan, Taipei City (TW)
(74) Representative: Ruschke, Hans Edvard

(56) References cited:
- EP-A- 1 447 337
- US-A- 414 585
- US-A- 5 222 603
- US-A1- 2004 038 064

## Description

### 1. Field of the Invention

The present invention relates to board materials for making storage boxes baskets as well as screens and more particularly, to such a board material, which has flexible and hard characteristics.

### 2. Description of the Related Art

Various materials including ceramics, glass, wood, plastics, stainless steel, and etc. can be used for making storage containers. Storage containers of wooden material cause an antique sense of beauty and are intensively invited by consumers for storing jewelry and personal small items.

The aforesaid materials such as ceramics, glass, wood, plastics, and stainless steel are hard materials. Storage containers made of these materials have a stiff structure. There are storage containers using hard members to support flexible fabric container body in shape.

US Patent 6,419,103, equivalent to DE 20106397U, discloses a bamboo basket, which includes a bottom frame, a top open frame, a plurality of flexible peripheral side panels respectively connected between the bottom frame and the top open frame and abutted against one another at an angle and defining with the bottom frame and the top open frame a holding space for holding things. The peripheral side panels each have a plurality of longitudinal bamboo slats and a plurality of transverse bamboo slats intersected with the longitudinal bamboo slats, a plurality of upright angle bars respectively connected between the bottom frame and the top open frame and attached to the abutted area between each two of the peripheral side panels at an outer side, and a plurality of packing strips respectively adhered to the peripheral side panels over the abutted area between each two of the peripheral side panels at an inner side opposite to the upright angle bars and a bottom side of each of the peripheral side panels. This structure of bamboo basket has a complicated structure, resulting in a high manufacturing cost.

US 2004/0038064, equivalent to EP 144 7 337, discloses a bendable board material, which has a flexible base sheet, and two sets of hard slats respectively symmetrically fastened to two opposite sides of the flexible base sheet and arranged in parallel. According to this design, the hard slats are equal in size and symmetrically fastened to the two opposite sides of the flexible base sheet. This design has an application limitation.

### SUMMARY OF THE INVENTION

The present invention has been accomplished to provide a twister belt that eliminates the aforesaid problems. According to a first embodiment of the present invention, the board material comprises a flexible sheet member and a plurality of hard strip members. The hard strip members includes a plurality of first hard strip members bonded in parallel to the first surface of the flexible sheet member, and a plurality of second hard strip members arranged into sets and bonded in parallel to the second surface of the flexible sheet member corresponding to the first hard strip members. Further, the first hard strip members have a width in an integral multiple of the width of the second hard strip members.

According to a second embodiment of the present invention, the board material comprises a plurality of flexible sheet members arranged in parallel and spaced from one another at a pitch, and a plurality of hard strip members bonded to the flexible sheet members at two sides. The hard strip members include a plurality of long hard strip members and short hard strip members. The long hard strip members are symmetrically bonded in parallel to the two opposite sides of the flexible sheet members. The short hard strip members are arranged in set and symmetrically bonded to the two opposite sides of the flexible sheet members and aligned in line between each two adjacent long hard strip members. The long hard strip members have a length equal to the combined widths of the flexible sheet member plus the gap between each two adjacent flexible sheet members. The short hard strip members each have a width equal to the width of one \flexible sheet member.

According to a third embodiment of the present invention, the board material comprises a plurality of flexible cord members arranged in parallel and spaced from one another at a pitch, and a plurality of hard strip members. The hard strip members include long hard strip members and short hard strip members. The long hard strip members are arranged in pairs and symmetrically bonded to the flexible cord members at two opposite sides in a parallel manner. The short hard strip members are bonded to the flexible cord members at two opposite sides between each pair of long hard strip members. The long hard strip members have a length equal to the combined widths of the flexible sheet member plus the gap between each two adjacent flexible sheet members. The short hard strip members each have a width equal to the width of one flexible sheet member.

In any of the aforesaid three embodiments, the hard strip members can be made having a trapezoidal or circularly arched cross section.

### BRIEF DESCRIPTION OF THE DRAWINGS

FIG. 1 is an exploded view of a board material in accordance with a first embodiment of the present invention.
FIG. 2 is an elevational assembly view of the board material in accordance with the first embodiment of the present invention.
FIG. 3 is an exploded view of a board material in accordance with a second embodiment of the present invention.
FIG. 4 is an elevational assembly view of the board material in accordance with the second embodiment of the present invention.
FIG. 5 is an exploded view of a board material in accordance with a third embodiment of the present invention.

### DETAILED DESCRIPTION OF THE INVENTION

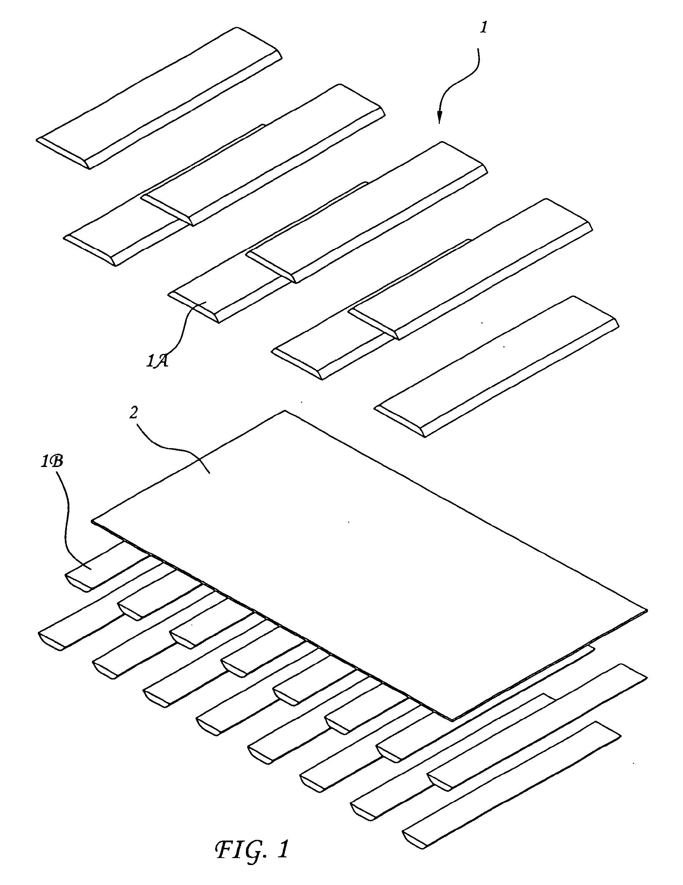

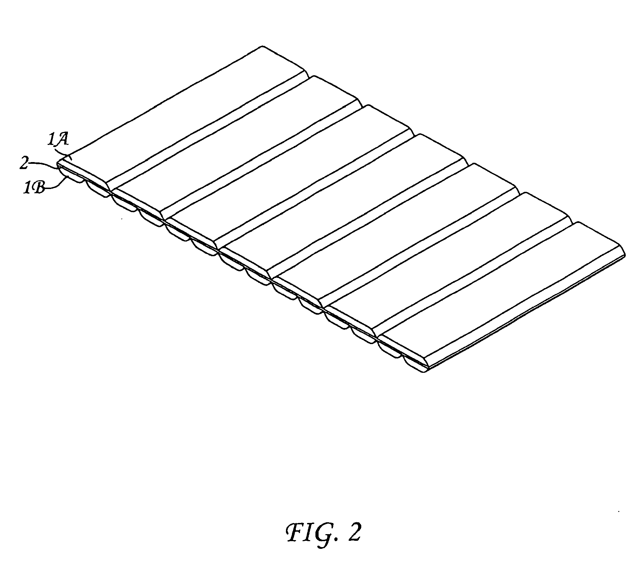

Referring to FIGS. 1 and 2, a board material in accordance with a first embodiment of the present invention is shown comprising a rectangular flexible sheet member **2,** and a plurality of hard strip members **1,** The hard strip members **1** include first hard strip members **1A** and second hard strip members **1B.** The width of the first hard strip members **1A** is an integral multiple (two times, three times, or the like) of the width of the second hard strip members **1B.** The rectangular flexible sheet member **2** is a soft, tough, strong fabric sheet member. Preferably, the hard strip members **1** are made of wood that gives an image of a high quality. Further, the hard strip members **1** can be made in any of a variety of shapes. According to this embodiment, the hard strip members **1** have a trapezoidal cross section, i.e., the two opposite short sides (distal ends) of each hard strip member **1** are bevelled. Alternatively, the hard strip members **1** can be made having a circularly arched cross section.

The first hard strip members **1A** and the second hard strip members **1B** have the respective back side covered with a glue and then the first hard strip members **1A** and the second hard strip members **1B** are respectively and symmetrically adhered to the top and bottom surfaces of the rectangular flexible sheet member 2, thereby forming the designed board material as shown in FIG. 2. By means of the flexible characteristic of the rectangular flexible sheet member **2,** the user can bend the board material along the gap between each two adjacent first hard strip members **1A.**

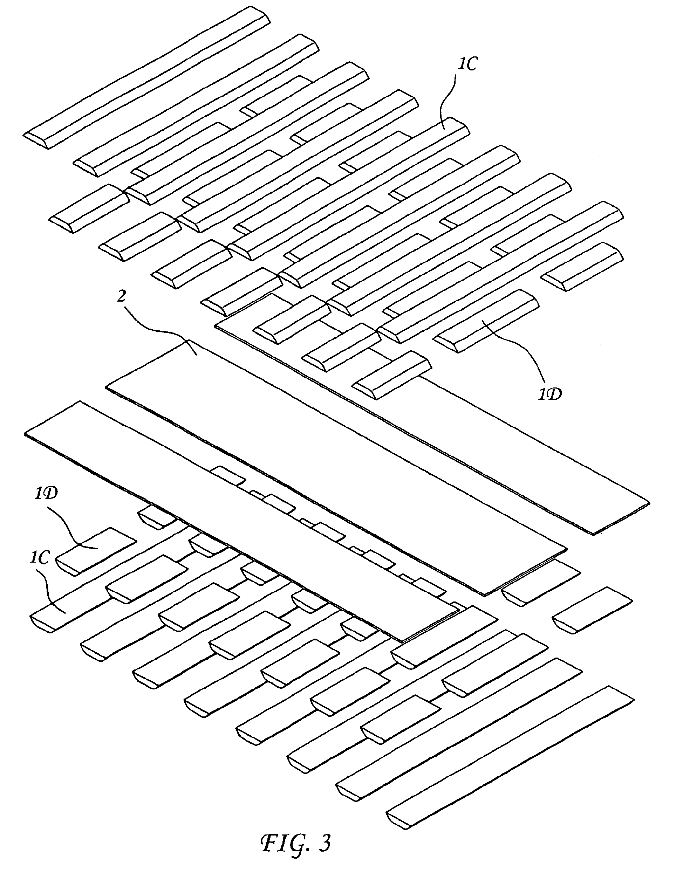

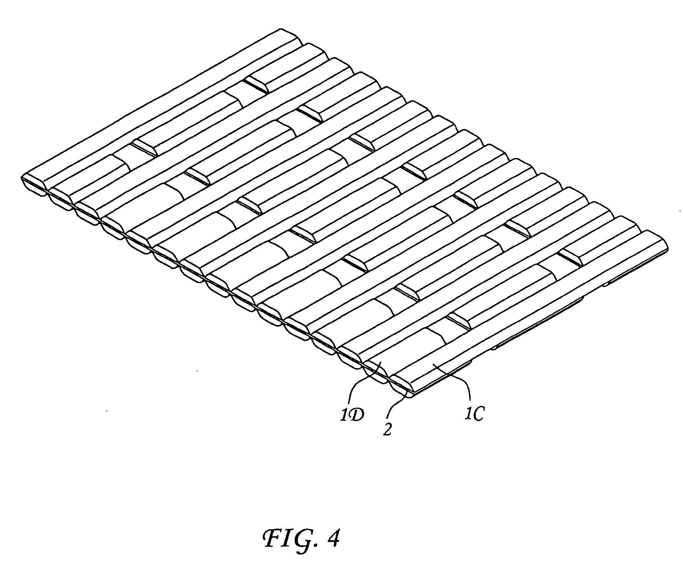

FIGS. 3 and 4 show a board material in accordance a second embodiment of the present invention. According to this embodiment, the board material is comprised of a plurality of rectangular flexible sheet members **2** and a plurality of hard strip members. The rectangular flexible sheet members **2** are arranged in parallel and spaced from one another at a pitch. Further, the rectangular flexible sheet members **2** are equal in length but different in width. The hard strip members include long hard strip members **1C** and short hard strip members **1D.** The long hard strip members **1C** have a length equal to the combined width of the rectangular flexible sheet members **2** plus the gap between each two adjacent rectangular flexible sheet members **2.** The short hard strip member **1D** have different lengths corresponding to the widths of rectangular flexible sheet members **2.** The long hard strip members **1C** are symmetrically transversely bonded to the top and bottom walls of the rectangular flexible sheet members **2.** The short hard strip members **1D** are respectively transversely bonded to the top and bottom walls of the rectangular flexible sheet members 2 and respectively aligned in line between each two adjacent long hard strip members **1C.**

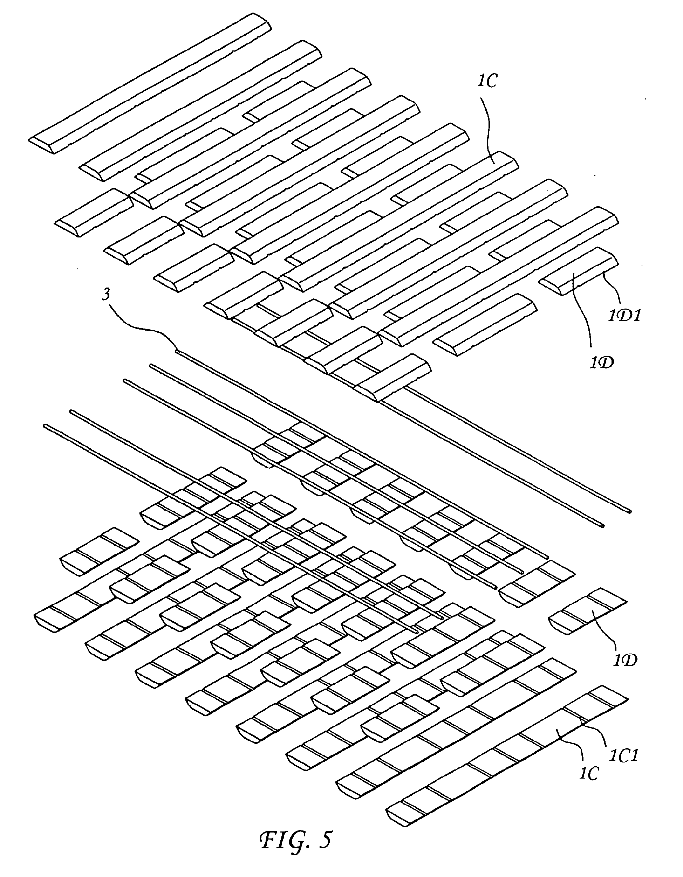

FIG. 5 shows a board material in accordance with a third embodiment of the present invention. This embodiment is similar to the aforesaid second embodiment with the exception of the use of flexible cord members **3** to substitute for the aforesaid rectangular flexible sheet members **2.** Further, the hard strip members **1C** and **1D** each have a plurality of transversely extending positioning grooves **IC1** or **1D1** for receiving the flexible cord members **3** on the bottom wall thereof so that the hard strip members **1C** and **1D** at one side of the flexible cord members **3** can be directly positively bonded to the hard strip members **1C** and **1D** at the opposite side of the flexible cord members **3.**

By means of the rectangular flexible sheet members **2** or the flexible cord members **3,** a board material in accordance with the present invention can be rolled into a roll and mounted with an end cap or the like to form a cylindrical container. A number of board materials can be fastened with frames to form a rectangular storage box. Further, a board material in accordance with the present invention can be used to make a screen for partition.

## Claims

1. A board material comprising:
a flexible sheet member (2), said flexible sheet member (2) having a first surface and a second surface opposite to said first surface; and
a plurality of hard strip members (1), said hard strip members (1) including a plurality of first hard strip members (1A) bonded in parallel to the first surface of said flexible sheet members (2), said first hard strip members (1A) each have two bevelled end edges, and a plurality of second hard strip members (1B) arranged into sets and bonded in parallel to the second surface of said flexible sheet member (2) corresponding to said first hard strip members (1A), said second hard strip members (1B) each having two bevelled end edges,
**characterized in that** said first hard strip members (1A) have a width that is an integral multiple of the width of said second hard strip members (1B).

2. The board material as claimed in claim 1, wherein said hard strip members (1) each have a trapezoidal cross section.

3. The board material as claimed in claim 1, wherein said hard strip members (1) each have a circularly arched cross section.

4. A board material comprising:
a plurality of flexible sheet members (2) arranged in parallel and spaced from one another at a pitch, said flexible sheet members (2) each having a first surface and second surface opposite to said first surface; and
a plurality of hard strip members, said hard strip members each having two bevelled end edges, said hard strip members including a plurality of long hard strip members (1C) and short hard strip members (1D), said long hard strip members (1C) being symmetrically bonded in parallel the first and second surfaces of said flexible sheet members, said short hard strip members (1D) being arranged in set and symmetrically bonded to the first and second surfaces of said flexible sheet members and aligned in line between each two adjacent long hard strip members (1C), said long hard strip members (1C) having a length equal to the combined widths of said flexible sheet member plus the gap between each two adjacent flexible sheet members, said short hard strip members (1D) each having a width equal to the width of one of said flexible sheet members.

5. The board material as claimed in claim 4, wherein said hard strip members each have a trapezoidal cross section.

6. The board material as claimed in claim 4, wherein said hard strip members each have a circularly arched cross section.

7. A board material comprising:
a plurality of flexible cord members (3) arranged in parallel and spaced from one another at a pitch; and
a plurality of hard strip members (1C, 1D), said hard strip members including long hard strip members and short hard strip members, said long hard strip members (1C) being arranged in pairs and symmetrically bonded to said flexible cord members (3) at two opposite sides in a parallel manner, said short hard strip members (1D) being bonded to said flexible cord members (3) at two opposite sides between each pair of said long hard strip members (1C), said long hard strip members (1C) having a length equal to the combined widths of said flexible sheet member plus the gap between each two adjacent flexible sheet members, said short hard strip members each having a width equal to the width of one of said flexible sheet members.

8. The board material as claimed in claim 7, wherein said hard strip members (1C, 1D) each having a plurality of transversely extending positioning grooves (1C1, 1D1) in a bottom wall thereof for receiving said flexible cord members (3).

9. The board material as claimed in claim 7, wherein said hard strip members (1C, 1D) each have a trapezoidal cross section.

10. The board material as claimed in claim 7, wherein said hard strip members (1C, 1D) each have a circularly arched cross section.

## Patentansprüche

1. Brettmaterial mit:
einem flexiblen Bogenelement (2), wobei das flexible Bogenelement (2) eine erste Fläche und eine zweite Fläche aufweist, die der ersten Fläche gegenüberliegt; und mit
einer Vielzahl von festen Streifenelementen (1), wobei die festen Streifenelemente (1) eine Vielzahl von ersten festen Streifenelementen (1A), die nebeneinander mit der ersten Fläche der flexiblen Bogenelemente (2) verbunden sind, wobei die ersten festen Streifenelemente (1A) jeweils zwei geschrägte Endkanten aufweisen, und eine Vielzahl von zweiten festen Streifenelementen (1 B) aufweisen, die in Gruppen angeordnet und nebeneinander mit der zweiten Fläche des flexiblen Bogenelementes (2) in Übereinstimmung mit den ersten festen Streifenelementen (1A) verbunden sind, wobei die zweiten festen Streifenelemente (1B) jeweils zwei geschrägte Endkanten aufweisen,
**dadurch gekennzeichnet, dass** die ersten festen Streifenelemente (1A) eine Breite haben, die ein ganzzahliges Vielfaches der Breite der zweiten festen Streifenelemente (1B) ist.

2. Brettmaterial nach Anspruch 1, bei dem die festen Streifenelemente (1) jeweils einen trapezförmigen Querschnitt aufweisen.

3. Brettmaterial nach Anspruch 1, bei dem die festen Streifenelemente (1) jeweils einen kreisförmig gewölbten Querschnitt aufweisen.

4. Brettmaterial mit:
einer Vielzahl von flexiblen Bogenelementen (2), die nebeneinander und voneinander in einem Abstand beabstandet angeordnet sind, wobei die flexiblen Bogenelemente (2) jeweils eine erste Fläche und eine der ersten Fläche gegenüberliegende zweite Fläche aufweisen; und mit
einer Vielzahl von festen Streifenelementen, wobei die festen Streifenelemente jeweils zwei abgeschrägte Endkanten aufweisen, wobei die festen Streifenelemente eine Vielzahl von langen festen Streifenelementen (1C) und kurzen festen Streifenelementen (1D) umfassen, wobei die langen festen Streifenelemente (1C) nebeneinander mit den ersten und zweiten Flächen der flexiblen Bogenelemente symmetrisch verbunden sind, wobei die kurzen festen Streifenelemente (1D) in Gruppen angeordnet und symmetrisch mit den ersten und zweiten Flächen der flexiblen Bogenelemente verbunden und in einer Linie zwischen jeweils zwei benachbarten langen festen Streifenelementen (1C) ausgerichtet sind, wobei die langen festen Streifenelemente (1C) eine Länge haben, die gleich der zusammengefassten Breiten der flexiblen Bogenelemente zuzüglich des Spalts zwischen jeweils zwei benachbarten flexiblen Bogenelemente ist, wobei die kurzen festen Streifenelemente (1D) jeweils eine Breite haben, die gleich der Breite eines der flexiblen Bogenelemente ist.

5. Brettmaterial nach Anspruch 4, bei dem die festen Streifenelemente jeweils einen trapezförmigen Querschnitt aufweisen.

6. Brettmaterial nach Anspruch 4, bei dem die festen Streifenelemente jeweils einen kreisförmig gewölbten Querschnitt aufweisen.

7. Brettmaterial mit:
einer Vielzahl von flexiblen Kordelementen (3), die nebeneinander und voneinander in einem Abstand beabstandet angeordnet sind; und mit
einer Vielzahl von festen Streifenelementen (1C, 1D), wobei die festen Streifenelemente lange feste Streifenelemente und kurze feste Streifenelemente umfassen, wobei die langen festen Streifenelemente (1C) in Paaren angeordnet und symmetrisch mit den flexiblen Kordelementen (3) an zwei gegenüberliegenden Seiten auf eine parallele Weise verbunden sind, wobei die kurzen festen Streifenelemente (1D) mit den flexiblen Kordelementen (3) an zwei gegenüberliegenden Seiten zwischen jedem Paar der langen festen Streifenelemente (1C) verbunden sind, wobei die langen festen Streifenelemente (1C) eine Länge haben, die gleich der zusammengefassten Breiten der flexiblen Bogenelemente zuzüglich des Spalts zwischen jeweils zwei benachbarten flexiblen Bogenelementen ist, wobei die kurzen festen Streifenelemente jeweils eine Breite haben, die gleich der Breite eines der flexiblen Bogenelemente ist.

8. Brettmaterial nach Anspruch 7, bei dem die festen Streifenelemente (1C, 1D) jeweils eine Vielzahl von sich schräg erstreckenden Positionierungsnuten (1C1, 1D1) zur Aufnahme der flexiblen Kordelemente (3) in einer unteren Wand derselben aufweist.

9. Brettmaterial nach Anspruch 7, bei dem die festen Streifenelemente (1C, 1D) jeweils einen trapezförmigen Querschnitt aufweisen.

10. Brettmaterial nach Anspruch 7, bei dem die festen Streifenelemente (1C, 1D) jeweils einen kreisförmigen bogenförmigen Querschnitt aufweisen.

## Revendications

1. Matériau de planche comprenant :
un élément de feuille souple (2), ledit élément de feuille souple (2) ayant une première surface et une seconde surface opposée à ladite première surface ; et
une pluralité d'éléments de bande durs (1), lesdits éléments de bande durs (1) incluant une pluralité de premiers éléments de bande durs (1A) collés parallèlement à la première surface desdits éléments de feuille souples (2), lesdits premiers éléments de bande durs (1A) ont chacun deux bords d'extrémité biseautés, et une pluralité de seconds éléments de bande durs (1B) agencés par groupes et collés parallèlement à la seconde surface dudit second élément de feuille souple (2) en correspondance avec lesdits premiers éléments de bande durs (1A), lesdits seconds éléments de bande durs (1B) ayant chacun deux bords d'extrémité biseautés,
**caractérisé en ce que** lesdits premiers éléments de bande durs (1A) ont une largeur qui est un multiple entier de la largeur desdits seconds éléments de bande durs (1B).

2. Matériau pour planche tel que revendiqué dans la revendication 1, dans lequel lesdits éléments de bande durs (1) ont chacun une section transversale trapézoïdale.

3. Matériau pour planche tel que revendiqué dans la revendication 1, dans lequel lesdits éléments de bande durs (1) ont chacun une section transversale circulairement arquée.

4. Matériau pour planche comprenant :
une pluralité d'éléments de feuille souples (2) agencés en parallèle et espacés les uns des autres d'un pas, lesdits éléments de feuille souples (2) ayant chacun une première surface et une seconde surface opposée à ladite première surface ; et
une pluralité d'éléments de bande durs, lesdits éléments de bande durs ayant chacun deux bords d'extrémité biseautés, lesdits éléments de bande durs incluant une pluralité d'éléments de bande durs longs (1C) et d'éléments de bande durs courts (1D), lesdits éléments de bande durs longs (1C) étant symétriquement collés parallèlement aux première et seconde surfaces desdits éléments de feuille souples, lesdits éléments de bande durs courts (1D) étant agencés en groupe et symétriquement collés aux première et seconde surfaces desdits éléments de feuille souples et alignés en ligne entre chaque deux éléments de bande durs longs adjacents (1C), lesdits éléments de bande durs longs (1C) ayant une longueur égale aux largeurs combinées dudit élément de feuille souple plus l'espace entre chaque deux éléments de feuille souples adjacents, lesdits éléments de bande durs courts (1D) ayant chacun une largeur égale à la largeur de l'un desdits éléments de feuille souples.

5. Matériau pour planche tel que revendiqué dans la revendication 4, dans lequel lesdits éléments de bande durs ont chacun une section transversale trapézoïdale.

6. Matériau pour planche tel que revendiqué dans la revendication 4, dans lequel lesdits éléments de bande durs ont chacun une section transversale circulairement arquée.

7. Matériau pour planche comprenant :
une pluralité d'éléments de corde souples (3) agencés parallèlement les uns aux autres et espacés les uns des autres à un pas ; et
une pluralité d'éléments de bande durs (1C, 1D), lesdits éléments de bande durs incluant des éléments de bande durs longs et des éléments de bande durs courts, lesdits éléments de bande durs longs (1C) étant agencés par paires et symétriquement collés auxdits éléments de corde souples (3) sur deux côtés parallèlement opposés, lesdits éléments de bande durs courts (1D) étant collés auxdits éléments de corde souples (3) sur deux côtés opposés entre chaque paire desdits éléments de bande durs longs (1C), lesdits éléments de bande durs longs (1C) ayant une longueur égale aux largeurs combinées dudit élément de feuille souple plus l'espace entre chaque deux éléments de feuille souples adjacents, lesdits éléments de bande durs courts ayant chacun une largeur égale à la largeur de l'un desdits éléments de feuille souples.

8. Matériau pour planche tel que revendiqué dans la revendication 7, dans lequel lesdits éléments de bande durs (1C, 1D) ont chacun une pluralité de rainures de positionnement s'étendant transversalement (1C1, 1D1) dans une paroi de fond de ceux-ci pour recevoir lesdits éléments de corde souples (3).

9. Matériau pour planche tel que revendiqué dans la revendication 7, dans lequel lesdits éléments de bande durs (1C, 1D) ont chacun une section transversale trapézoïdale.

10. Matériau pour planche tel que revendiqué dans la revendication 7, dans lequel lesdits éléments de bande durs (1C, 1D) ont chacun une section transversale circulairement arquée.
